# EUROPEAN PATENT SPECIFICATION

(11) **EP 3 305 522 B1**
(45) Date of publication and mention of the grant of the patent: **27.05.2020**
(21) Application number: 16800130.3
(22) Date of filing: 27.05.2016
(51) Int. Cl.: B32B 7/06, B32B 27/30, B44C 1/17

(54) **TRANSFER FILM**
ÜBERTRAGUNGSFOLIE
FILM DE TRANSFERT

(30) Priority: 28.05.2015 JP 2015108509
(43) Date of publication of application: 11.04.2018
(73) Proprietor: DAI NIPPON PRINTING CO., LTD., Tokyo-to (JP)
(72) Inventor: YOSHIDA, Kazuya, Tokyo 162-8001 (JP); HASEGAWA, Hiroyuki, Tokyo 162-8001 (JP); IMAKURA, Yoshihiro, Tokyo 162-8001 (JP); HATTORI, Ryoji, Tokyo 162-8001 (JP)
(74) Representative: Müller-Boré & Partner Patentanwälte PartG mbB
(86) International application number: PCT/JP2016/065785
(87) International publication number: WO 2016/190426

(56) References cited:
- WO-A1-2014/157678
- JP-A- H09 207 465
- JP-A- 2001 180 135
- JP-A- 2005 106 857
- JP-A- 2007 118 467
- JP-A- 2015 053 156
- JP-A- 2015 056 990
- US-A1- 2011 262 739
- DATABASE WPI Week 201471 Thomson Scientific, London, GB; AN 2014-T28955 XP002786251, & JP 2014 198317 A (DAINIPPON PRINTING CO LTD) 23 October 2014 (2014-10-23)

## Description

### BACKGROUND OF THE INVENTION

### Field of the Invention

The present invention relates to a transfer film, and more particularly to a transfer film having good transfer property and capable of imparting sufficient durability to the transfer object surface.

### Background Art

ID cards such as identification paper and IC cards such as an ATM card, where individual information such as a face photo, an address, and a name is recorded, are subjected to security processing so that the contents of the information are not falsified and altered. For example, an IC card having a surface on which hologram is provided is widely distributed. Such an IC card has a surface on which a transfer layer including a protective layer is provided by using a transfer film, in order to protect the information recorded and the hologram.

A transfer film has a configuration where a transfer layer including a protective layer or the like, which can be transferred onto a substrate, is provided, and the transfer layer can be transferred onto the surface of a transfer object such as an IC card, to thereby impart durability such as solvent resistance and abrasion resistance to the transfer object surface. Such a transfer film is required to have high transfer property without occurrence of any transfer failures such as tailing and burr. For example, Japanese Laid-open Patent Application (Kokai) No. 2013-111942 (Patent Literature 1) discloses a thermal transfer film having a hard coat layer formed from an ink composition containing inorganic particles and a polyfunctional isocyanate. However, there has been room for improvement in transfer property and durability of a decorative molding or printed product, when the hard coat layer or the like is transferred from the thermal transfer film to a transfer object. WO 2014/157678 A1 (Patent Literature 2) discloses a protective layer transfer sheet, which is obtained by providing on one surface of a base a transfer layer that is releasable from the base, wherein the transfer layer is obtained by sequentially laminating a release layer, a protective layer, a receiving layer, and an adhesive layer in this order from the base side; the protective layer is configured to contain an acrylic polyol resin including various hydroxyl group-containing (meth)acrylate resins, wherein the hydroxyl value of the acrylic polyol resin 10-100 mgKOH/g, the protective layer includes a filler that is 200 nm or less in particular diameter, a curable acrylic polyol resin that is cured by a curing agent, and a polyfunctional isocyanate.

US 2011/0262739 A1 (Patent Literature 3) discloses a transfer sheet provided with a protective layer and a releasable support sheet, a transfer layer, and an adhesive. The protective layer precursor is obtained by mixing active energy ray-curable resin composition containing polymer having (meth)acryl equivalent of 100-300 g/equivalents, hydroxyl value of 20-500 and weight average molecular weight of 5 000-50 000, and polyfunctional isocyanate with colloidal silica particles. The size of the particles is preferably in the range of 10 to 50 nm.

### Citation List

### Patent Literature

Patent Literature 1: Japanese Laid-open Patent Application (Kokai) No. 2013-111942
Patent Literature 2: WO 2015/157678 A1
Patent Literature 3: US 2011/0262739 A1

### SUMMARY OF THE INVENTION

### Technical Problem

In view of such a situation, a main object of the present invention is to provide a transfer film which is excellent in transfer property when a protective layer or the like is transferred to a transfer object and can easily provide a printed product having high durability.

### Solution to Problem

The transfer film according to the present invention is a transfer film comprising a substrate and a protective layer peelably provided on the substrate, wherein
the protective layer comprises an active ray-cured resin;
the active ray-cured resin contains a hydroxyl group-containing (meth)acrylate compound as a polymerization component; and
the hydroxyl value of the hydroxyl group-containing (meth)acrylate compound is 20 mg KOH/g or more and 120 mg KOH/g or less.

In a preferred aspect of the present invention, the protective layer comprises a filler having a volume average particle size of 10 nm or more and 100 nm or less.

In a preferred aspect of the present invention, an adhesive layer is further provided on the protective layer.

In a preferred aspect of the present invention, the adhesive layer has a function as a receptive layer.

In a preferred aspect of the present invention, a release layer is provided between the substrate and the protective layer.

In a preferred aspect of the present invention, the adhesive layer contains silicone.

### Advantageous Effect of Invention

The transfer film according to the present invention comprises a substrate and a protective layer peelably provided on the substrate, wherein the protective layer comprises an active ray-cured resin; the active ray-cured resin contains a hydroxyl group-containing (meth)acrylate compound as a polymerization component; and wherein the hydroxyl value of the hydroxyl group-containing (meth)acrylate compound is 20 mg KOH/g or more and 120 mg KOH/g or less, so that the transfer film can impart sufficient durability such as abrasion resistance and solvent resistance to a transfer object surface while maintaining transparency and water resistance and can be transferred without causing any transfer failures.

### BRIEF DESCRIPTION OF THE DRAWINGS

FIG. 1 is a schematic cross-sectional view of a transfer film according to one embodiment of the present invention.
FIG. 2 is a schematic cross-sectional view of a transfer film according to one embodiment of the present invention.
FIG. 3 is a schematic cross-sectional view of a transfer film according to one embodiment of the present invention.
FIG. 4 is a schematic cross-sectional view of a transfer film according to one embodiment of the present invention.
FIG. 5 is a schematic cross-sectional view of a transfer film according to one embodiment of the present invention.

### DETAILED DESCRIPTION OF THE INVENTION

### Definition

As used herein, the terms "part(s)", "%", "ratio", and the like with respect to compounding are on a mass basis, unless particularly noted. The term "active ray-curable resin" means a precursor or a composition before irradiation with active ray, and the active ray-curable resin subjected to curing by irradiation with active ray refers to an "active ray-cured resin."

As used herein, the term "active ray" means any radiation that can chemically act on the active ray-curable resin to promote polymerization, and specifically means visible light, ultraviolet light, X-ray, electron beam, α-ray, β-ray, γ-ray, and the like.

### Transfer Film

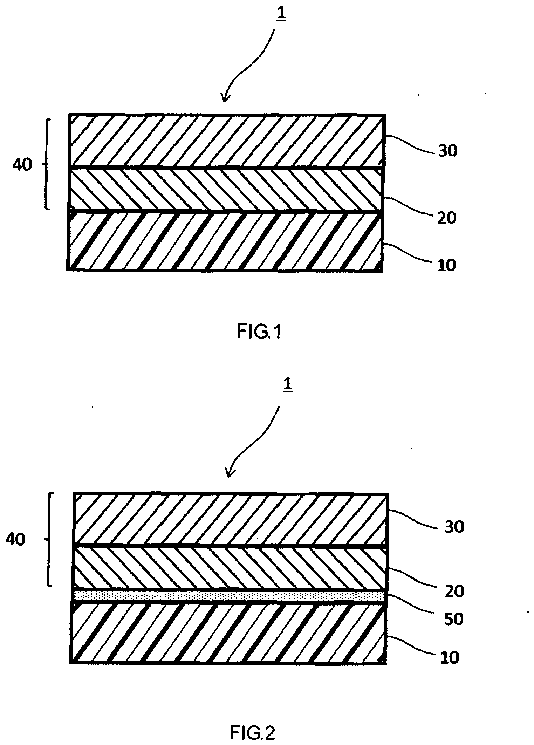

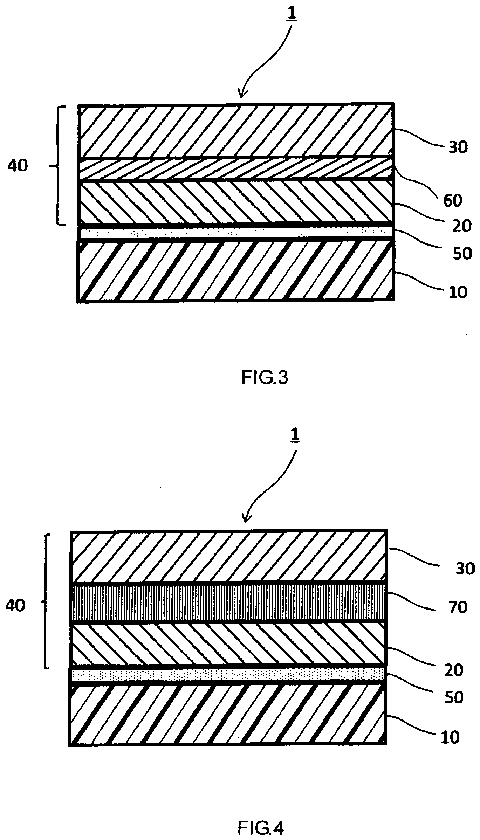

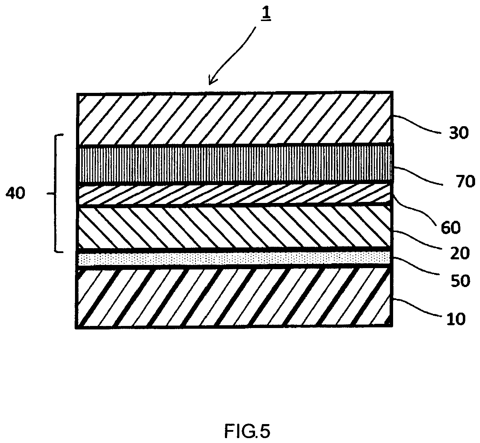

Embodiments of the present invention will be described in detail with reference to drawings. FIGS. 1 and 2 each illustrates a schematic cross-sectional view of a transfer film according to one embodiment of the present invention. The transfer film according to the present invention comprises a substrate 10 and a protective layer 20 peelably provided on the substrate 10 (see FIG. 1). When using such transfer film 1 to transfer the transfer layer 40 to a transfer object (not shown), the protective layer 20 is transferred to the transfer object as the transfer layer 40. An adhesive layer 30 may be provided on the protective layer 20 (see FIG. 1). A release layer 50 may be provided between the substrate 10 and the protective layer 20 so that the protective layer 20 is easily peeled off from the substrate 10 and the transfer layer 40 is transferred to the transfer object (see FIG. 2). An intermediate layer 60 may be provided between the protective layer 20 and adhesive layer 30 (see FIG. 3). In the transfer film, a receptive layer 70 may be provided between the protective layer 20 or the intermediate layer 60 and the adhesive layer 30 (see FIGS. 4 and 5). An anchor layer may be provided between the substrate 10 and the release layer 50 (not shown). As described below, the adhesive layer which is optionally provided, when the configuration thereof is adjusted, can also thus serve as a receptive layer. Hereinafter, respective layers forming the transfer film according to the present invention will be described.

### Substrate

Any substrate can be used as the substrate without particular limitation, as long as such any substrate has heat resistance so as to be able to withstand heat energy (for example, heat of a thermal head) in transfer of the transfer layer from the transfer film to the transfer object and has mechanical strength and solvent resistance so as to be able to support the transfer layer. Examples include polyester-based resins such as polyethylene terephthalate, polybutylene terephthalate, polyethylene naphthalate, a polyethylene terephthalate-isophthalate copolymer, a terephthalic acid-cyclohexanedimethanol-ethylene glycol copolymer and an coextruded film of polyethylene terephthalate/polyethylene naphthalate; polyamide-based resins such as nylon 6 and nylon 66; polyolefin-based resins such as polyethylene, polypropylene and polymethylpentene; vinyl resins such as polyvinyl chloride; acrylic resins such as polyacrylate, polymethacrylate and polymethyl methacrylate; imide-based resins such as polyimide and polyetherimide; engineering resins such as polyarylate, polysulfone, polyether sulfone, polyphenylene ether, polyphenylene sulfide, polyaramid, polyether ketone, polyether nitrile, polyether ether ketone, polyether sulfite and polycarbonate; styrene-based resins such as polystyrene, high-impact polystyrene, an AS resin (acrylonitrile-styrene copolymer) and an ABS resin (acrylonitrile-butadiene-styrene copolymer); and cellulose-based resins such as cellophane, cellulose acetate and nitrocellulose.

The substrate may be a copolymer resin or a composite (including an alloy) mainly containing any resin(s) described above, or a laminate including a plurality of layers. While the substrate may be a stretched film or an unstretched film, a film uniaxially or biaxially stretched is preferably used for the purpose of an enhancement in strength. The substrate is used as a film, sheet, or board comprising at least one layer of these resins. Among substrates made of resins described above, a film of polyester such as polyethylene terephthalate or polyethylene naphthalate is suitably used because of being excellent in heat resistance and mechanical strength, and, in particular, a polyethylene terephthalate film is more preferable.

In addition, asperities can be, if necessary, imparted to the substrate surface in order to prevent blocking. Examples of the procedure for forming such asperities on the substrate include matting-agent kneading, sand-blasting, hair-line, mat coating, and chemical etching processings. When mat coating is carried out, organic substances such as crosslinked acrylic resins and crosslinked styrene-based resins, and inorganic substances such as silicon dioxide, zinc oxide and titanium dioxide can be used.

A substrate having a thickness of 0.5 µm or more and 50 µm or less, more preferably 4 µm or more and 20 µm or less can be suitably used. When the thickness of the substrate is within the above numerical range, high mechanical strength and transfer property can be realized.

Since a release layer can be provided on the surface of the substrate as described below, an easily adhesive treatment such as a corona discharge treatment, a plasma treatment, an ozone treatment, a frame treatment, a primer (also referred to as "anchor coat", "adhesion promoter" or "easy adhesive agent") coating treatment, a pre-heating treatment, a dust removal treatment, a vapor deposition treatment, an alkali treatment, or providing of an antistatic layer may be performed in advance on the surface on which the release layer is to be provided. Additive(s) such as a filler, a plasticizer, a colorant, and an antistatic agent may also be added to the substrate, if necessary.

### Protective Layer

Next, the protective layer constituting the transfer layer will be described.

The protective layer comprises an active ray-cured resin and serves to protect the transfer object surface.

The active ray-cured resin includes compositions obtained by appropriately mixing polymers, prepolymers, oligomers and/or monomers having in its molecule a polymerizable unsaturated bond such as (meth)acryloyl group or (meth)acryloyloxy group, or an epoxy group.

The active ray-cured resin forming the protective layer contains a hydroxyl group-containing (meth)acrylate compound as a polymerization component. Examples of the hydroxyl group-containing (meth)acrylate compound include 2-hydroxyethyl (meth)acrylate, 2-hydroxypropyl (meth)acrylate, 3-hydroxypropyl (meth)acrylate, 4-hydroxybutyl (meth)acrylate, 3-methyl-3-hydroxybutyl (meth)acrylate, 1,1-dimethyl-3-butyl (meth)acrylate, 1,3-dimethyl-3-hydroxybutyl (meth)acrylate, 2,2,4-trimethyl-3-hydroxypentyl (meth)acrylate, 2-ethyl-3-hydroxyhexyl (meth)acrylate, glycerol mono(meth)acrylate, polypropylene glycol mono(meth)acrylate, polyethylene glycol (meth)acrylate, poly(ethylene glycol-propylene glycol) mono(meth)acrylate, N-methylolacrylamide, allyl alcohol, methallyl alcohol, pentaerythritol (meth)acrylate, alkoxylated pentaerythritol poly(meth)acrylate dipentaerythritol poly(meth)acrylate, alkoxylated dipentaerythritol poly(meth)acrylate, dipentaerythritol penta(meth)acrylate. The protective layer may contain one or two or more of these hydroxyl group-containing (meth)acrylate compounds.

The hydroxyl value of the hydroxyl group-containing (meth)acrylate compound is 20 mg KOH/g or more and 120 mg KOH/g or less, more preferably 30 mg KOH/g or more and 110 mg KOH/g or less, more preferably 35 mg KOH/g or more and 100 mg KOH/g or less. When the hydroxyl value of the hydroxyl group-containing (meth)acrylate compound contained in the protective layer is within the above numerical range, it is possible to enhance the transfer property of the transfer film and the abrasion resistance of a printed product obtained by using the transfer film while maintaining the transparency and water resistance of the protective layer. As used herein, the hydroxyl value of the hydroxyl group-containing (meth)acrylate compound means the amount in mg of potassium hydroxide required for acetylating hydroxyl groups contained in 1 g of hydroxyl group-containing (meth)acrylate compound. The hydroxyl value can be determined by a method according to JIS-K-1557-1 (published in 2007). In the present invention, the hydroxyl group of the (meth)acrylate compound also includes a hydroxyl group which has not been reacted when the (meth)acrylate compound is produced by a reaction such as esterification. For example, as disclosed in Japanese Patent No. 2686824, dipentaerythritol polyacrylate can be obtained by esterification reaction of dipentaerythritol with acrylic acid. At this time, the obtained dipentaerythritol polyacrylate has unreacted dipentaerythritol-derived hydroxyl groups. This hydroxyl group is also included in the hydroxyl group of the (meth)acrylate compound described herein.

The mass-average molecular weight of the hydroxyl group-containing (meth)acrylate compound is preferably in the range of 200 or more and 5,000 or less. When the mass-average molecular weight of the hydroxyl group-containing (meth)acrylate compound is within the above numerical range, it is possible to enhance the abrasion resistance of the protective layer. As used herein, the "mass-average molecular weight" means a value measured by gel permeation chromatography with polystyrene as a standard substance, and can be measured by a method according to JIS-K-7252-1 (published in 2008).

The hydroxyl group-containing (meth)acrylate compound is preferably contained in an amount of 10% by mass or more and 70% by mass or less, more preferably 20% by mass or more and 50% by mass or less, based on the total solid content of the protective layer. When the content of the hydroxyl group-containing (meth)acrylate compound is within the above numerical range, it is possible to enhance the transfer property to the transfer object and the abrasion resistance of a printed product obtained by using the transfer film.

The protective layer may contain an unsaturated bond-containing (meth)acrylate copolymer as a polymerization component. Examples of the unsaturated bond-containing (meth)acrylate copolymer include polyester (meth)acrylates obtained by introducing (meth)acrylic acid into a polyester obtained by bonding of polybasic acids such as adipic acid, trimellitic acid, maleic acid, phthalic acid, terephthalic acid, himic acid, malonic acid, succinic acid, itaconic acid, pyromellitic acid, fumaric acid, glutaric acid, pimelic acid, sebacic acid, dodecanoic acid, or tetrahydrophthalic acid to polyhydric alcohols such as ethylene glycol, propylene glycol, diethylene glycol, propylene oxide, 1,4-butanediol, triethylene glycol, tetraethylene glycol, polyethylene glycol, glycerol, trimethylolpropane, pentaerythritol, sorbitol, 1,6-hexanediol or 1,2,6-hexanetriol; urethane (meth)acrylates obtained by introducing (meth)acrylic acid into a urethane resin, such as ethylene glycol/adipic acid/tolylene diisocyanate/2-hydroxyethyl acrylate, polyethylene glycol/tolylene diisocyanate/2-hydroxyethyl acrylate, hydroxyethylphthalyl methacrylate/xylene diisocyanate, 1,2-polybutadiene glycol/tolylene diisocyanate/2-hydroxyethyl acrylate, and trimethylolpropane/propylene glycol/tolylene diisocyanate/2-hydroxyethyl acrylate; and epoxy (meth)acrylates, melamine (meth)acrylates and triazine (meth)acrylates obtained by introducing (meth)acrylic acid into an epoxy resin, such as bisphenol A/epichlorohydrin/(meth)acrylic acid and phenol novolac/epichlorohydrin/(meth)acrylic acid.

The protective layer may contain, as a polymerization component, a prepolymer, oligomer and/or monomer as described below in addition to the unsaturated bond-containing acrylic copolymer.

Examples of the prepolymer include silicone resin acrylates such as polysiloxane (meth)acrylate and polysiloxane/diisocyanate/2-hydroxyethyl(meth)acrylate; and others such as alkyd-modified (meth)acrylates obtained by introducing (meth)acryloyl group into an oil-modified alkyd resin, and spirane resin acrylates.

Examples of the monomer or oligomer include acrylic ester compounds and methacrylic ester compounds having an ethylenic double bond, which are generally known as active ray-polymerizable monomer/oligomer. These compounds have at least a methacryloyl group or an acryloyl group. Examples include monofunctional acrylic acid esters such as 2-ethylhexyl acrylate, 2-hydroxypropyl acrylate, glycerol acrylate, tetrahydrofurfuryl acrylate, phenoxyethyl acrylate, nonylphenoxyethyl acrylate, tetrahydrofurfuryloxyethyl acrylate, tetrahydrofurfuryloxyhexanolide acrylate, acrylate of an ε-caprolactone adduct of 1,3-dioxane alcohol, and 1,3-dioxolan acrylate, or methacrylic acid, itaconic acid, crotonic acid, and maleic acid esters obtained by replacing these acrylates with methacrylates, itaconates, crotonates, and maleates; difunctional acrylic acid esters such as ethylene glycoldiacrylate, triethylene glycol diacrylate, pentaerythritol diacrylate, hydroquinone diacrylate, resorcin diacrylate, hexanediol diacrylate, neopentyl glycol diacrylate, tripropylene glycol diacrylate, diacrylate of hydroxypivalic acid neopentyl glycol, diacrylate of neopentyl glycol adipate, diacrylate of an ε-caprolactone adduct of hydroxypivalic acid neopentyl glycol, 2-(2-hydroxy-1,1-dimethylethyl)-5-hydroxymethyl-5-ethyl-1,3-dioxane diacrylate, tricyclodecanedimethylol acrylate, an ε-caprolactone adduct of tricyclodecanedimethylol acrylate, and diacrylate of diglycidyl ether of 1,6-hexanediol, or methacrylic acid, itaconic acid, crotonic acid, and maleic acid esters obtained by replacing these acrylates with methacrylates, itaconates, crotonates, and maleates; multifunctional acrylic acid esters such as trimethylolpropane triacrylate, ditrimethylolpropane tetraacrylate, trimethylolethane triacrylate, pentaerythritol triacrylate, pentaerythritol tetraacrylate, dipentaerythritol tetraacrylate, dipentaerythritol pentaacrylate, dipentaerythritol hexaacrylate, an ε-caprolactone adduct of dipentaerythritol hexaacrylate, pyrogallol triacrylate, propionic acid/dipentaerythritol triacrylate, propionic acid/dipentaerythritol tetraacrylate, and hydroxypivalaldehyde-modified dimethylolpropane triacrylate, or methacrylic acid, itaconic acid, crotonic acid, and maleic acid esters obtained by replacing these acrylates with methacrylates, itaconates, crotonates, and maleates; a phosphazene monomer, triethylene glycol, isocyanuric acid EO-modified diacrylate, isocyanuric acid EO-modified triacrylate, dimethylol tricyclodecane diacrylate, trimethylolpropane acrylic acid benzoic acid ester, alkylene glycol type acrylic acid-modified acrylates and modified urethane acrylates.

The protective layer preferably contains a filler. Examples of the filler include an organic filler, an inorganic filler, and an organic-inorganic hybrid filler. The filler may be a powder or a sol. Among the above fillers, an inorganic particle is preferable because it has high hardness and thereby can improve scratch resistance.

The filler contained in the protective layer preferably has an average particle size of 10 nm or more and 100 nm or less, and more preferably 10 nm or more and 50 nm or less. When the average particle size of the filler is within the above range, it is possible to prevent deterioration of the dispersibility of the filler to maintain the stability of the protective layer coating liquid while maintaining the transparency of the protective layer. In the present invention, the "average particle size" means a volume average particle size and can be measured with a particle size/particle diameter distribution analyzer (for example, Nanotrac particle size distribution analyzer, manufactured by NIKKISO CO., LTD.) according to JIS-Z-8819-2 (published in 2001).

Examples of the inorganic particle include metal oxide particles such as a silica particle (colloidal silica, fumed silica, precipitated silica, and the like), an alumina particle, a zirconia particle, a titania particle, and a zinc oxide particle, and a silica particle is preferably used from the viewpoint of having high hardness and enhancing abrasion resistance. The inorganic particle is preferably subjected to a surface treatment with a silane coupling agent such as γ-aminopropyltriethoxysilane or γ-methacryloxypropyltrimethohxysilane.

The filler is preferably contained in a proportion of 5% by mass or more and 60% by mass or less, more preferably 10% by mass or more and 50% by mass or less, based on the total solid content of the protective layer. When the content of the filler is within the above numerical range, it is possible to enhance transfer property of the transfer film and abrasion resistance of a printed product obtained by using the transfer film, and also to prevent occurrence of defects such as cracks due to the protective layer being brittle.

The thickness of the protective layer is preferably 1 µm or more and 20 µm or less, more preferably 1 µm or more and 8 µm or less. When the thickness of the protective layer is within the above numerical range, it is possible to impart high durability while preventing transfer failure.

The protective layer can be formed by coating a substrate or a release layer described later with a coating liquid containing the above-described active ray-curable resin and filler by a known procedure such as roll coating, reverse roll coating, gravure coating, reverse gravure coating, bar coating, or rod coating to form a coating film, and then crosslinking and curing the polymerization component such as the above-mentioned polymerizable copolymer by active ray. For example, ultraviolet irradiation can be carried out using a conventionally known ultraviolet irradiation apparatus, and any of various apparatuses such as a high-pressure mercury lamp, a low-pressure mercury lamp, a carbon-arc lamp, a xenon arc lamp, a metal halide lamp, an electrodeless ultraviolet lamp, or an LED can be used without limitation. Electron beam irradiation may be carried out by using either a high-energy electron beam irradiation apparatus that radiates electron beam at an energy of 100 keV or more and 300 keV or less or a low-energy electron beam irradiation apparatus that radiates electron beam at an energy of 100 keV or less, and an irradiation system may be either a scanning irradiation system or a curtain type irradiation system.

### Adhesive Layer

Next, the adhesive layer which is optionally provided in the transfer film according to the present invention will be described.

The adhesive layer is provided so as to be positioned on the surface of the transfer film, and improves the adhesion between the transfer layer and the transfer object. The adhesive layer may also serve as a receptive layer on which an image is to be formed by thermal transfer from a thermal transfer sheet having a color material layer according to a thermal transfer method. The transfer layer of the transfer film, on which the image is formed, is transferred to the transfer object, resulting in formation of a printed product.

Examples of the material for forming the adhesive layer include a thermal adhesion-type adhesive agent which is molten or softened by heat and thus bonded, and specific examples include an ionomer resin, an acid-modified polyolefin-based resin, an ethylene-(meth)acrylic acid copolymer, an ethylene-(meth)acrylic acid ester copolymer, a polyester-based resin, a polyamide-based resin, a vinyl resin, an acryl/methacryl-based (meth)acrylic resin, an acrylic acid ester-based resin, a maleic acid resin, a butyral-based resin, an alkyd resin, a polyethylene oxide resin, a phenol-based resin, a urea resin, a melamine resin, a melamine-alkyd resin, a cellulose-based resin, a polyurethane-based resin, a polyvinyl ether resin, a silicone resin, and a rubber-based resin. These resins may be used singly or in combination of a plurality of them. Among them, a vinyl resin, an acrylic resin, a butyral-based resin, and a polyester-based resin are preferable in terms of an adhesion force. A vinyl resin, an acrylic resin, an ethylene-(meth)ethyl acrylate copolymer and an acrylic ester copolymer are more preferable.

In the case where the adhesive layer serves as a receptive layer, a conventionally known resin which easily receives a heat-transferable color material such as a sublimation dye or a thermal fusible ink is preferably used. Examples of the resin include a polyolefin-based resin such as polypropylene, a halogenated resin such as polyvinyl chloride or polyvinylidene chloride, a vinyl resin such as polyvinyl acetate, a vinyl chloride-vinyl acetate-based polymer, an ethylene-vinyl acetate copolymer or a polyacrylic acid ester, a polyester resin such as polyethylene terephthalate or polybutylene terephthalate, a polystyrene-based resin, a polyamide-based resin, a copolymer-based resin made of olefin such as ethylene or propylene with other vinyl polymer, an ionomer, a cellulose-based resin such as cellulose diastase, and polycarbonate. Among them, a vinyl chloride-vinyl acetate-based polymer or polyvinyl chloride resin is preferable, and a vinyl chloride-vinyl acetate-based polymer is particularly preferable.

The content of the resin in the adhesive layer is preferably 30% by mass or more and 100% by mass or less, more preferably 50% by mass or more and 100% by mass or less, based on the total solid content of the adhesive layer. When the content of the resin in the adhesive layer is within the above numerical range, it is possible to enhance the transfer property to the transfer object and also enhance the receptivity to a heat-transferable color material such as a sublimation dye or thermal fusible ink.

The adhesive layer preferably contains silicone. As used herein, silicone includes a modified silicone resin and a modified silicone oil. Examples of the modified silicone resin include an epoxy-modified silicone resin, a monoamine-modified silicone resin, a diamine-modified silicone resin, and a mercapto-modified silicone resin. Examples of the modified silicone oil include an epoxy-modified silicone oil, a monoamine-modified silicone oil, a diamine-modified silicone oil, and a mercapto-modified silicone oil. When the adhesive layer contains silicone, releasability from the thermal transfer sheet having the color material layer can be enhanced.

The content of silicone in the adhesive layer is preferably 0.1% by mass or more and 30% by mass or less, more preferably 1% by mass or more and 20% by mass or less, based on the total solid content of the adhesive layer. When the content of silicone in the adhesive layer is within the above numerical range, releasability from the thermal transfer sheet having the color material layer and transfer property to the transfer object can be compatible.

Usually, the thickness of the adhesive layer is preferably in the range of 0.1 µm or more and 10 µm or less, and more preferably in the range of 0.3 µm or more and 3 µm or less.

The adhesive layer can be formed by dissolving or dispersing single or multiple materials selected from the above materials and various additives added as necessary in a proper solvent such as water or an organic solvent to prepare a coating liquid for the adhesive layer, applying the coating liquid by a method such as a gravure printing method, a screen printing method, or a reverse coating method using a gravure plate, and drying it.

### Release Layer

Next, the release layer which is optionally provided in the transfer film according to the present invention will be described.

The release layer, which is provided on the substrate, is a layer that allows the transfer layer provided thereon to be peeled from the transfer film and to be transferred to the transfer object. In peeling of the transfer layer from the transfer film, the release layer remains on the substrate.

Examples of the resin for use in the release layer include melamine-based resin, silicone, fluororesin, cellulose-based resin, urea-based resin, polyolefin-based resin, acrylic resin and cellulosic resin. Among them, melamine-based resin is preferable because of being capable of imparting a proper adhesion force of the transfer layer and the substrate to the transfer film.

Usually, the thickness of the release layer is preferably in the range of 0.1 µm or more and 5 µm or less, and more preferably in the range of 0.5 µm or more and 2 µm or less.

The release layer can be formed by dissolving or dispersing the above resin in a solvent, coating the substrate with the resulting coating liquid by a known coating method such as roll coating or gravure coating and drying it, and baking it at a temperature of about 100°C or more and 200°C or less.

### Intermediate Layer

Next, the intermediate layer which is optionally provided in the transfer film according to the present invention will be described.

The intermediate layer is provided on the protective layer. The intermediate layer preferably contains a thermoplastic resin and an isocyanate compound. Examples of the thermoplastic resin include polyester resin, polyurethane resin, acrylic resin, polycarbonate resin, polyvinylalcohol resin, vinyl chloride-vinyl acetate copolymer and polyvinyl butyral resin. Among them, polyester resin and vinyl chloride-vinyl acetate copolymer are preferred, and more preferred is a combination of polyester resin and vinyl chloride-vinyl acetate copolymer. When the combination of polyester resin and vinyl chloride-vinyl acetate copolymer is used, the compounding ratio thereof (polyester resin/vinyl chloride-vinyl acetate copolymer) is preferably 1/40 or more and 30 or less, more preferably 1/30 or more and 20 or less, still more preferably 1/25 or more and 15 or less, most preferably 1/2 or more and 6 or less, on a mass basis. The content of the thermoplastic resin in the intermediate layer is preferably 50% by mass or more and 90% by mass or less, more preferably 60% by mass or more and 90% by mass or less, based on the total solid content of the intermediate layer. When the content of the thermoplastic resin is within the above numerical range, the adhesion to the transfer object or the adhesive layer can be further enhanced.

As the isocyanate compound, a polyisocyanate compound having two or more isocyanate groups in the molecule is preferable. Examples of the polyisocyanate compound include xylene diisocyanate, p-phenylene diisocyanate, 1-chloro-2,4-phenyl diisocyanate, 2-chloro-1,4-phenyl diisocyanate, 2,4-toluene diisocyanate, 2,6-toluene diisocyanate, 1,5-naphthalene diisocyanate, tolidine diisocyanate, p-phenylene diisocyanate, trans-cyclohexane, 1,4-diisocyanate, hexamethylene diisocyanate, 4,4'-biphenylene diisocyanate, triphenylmethane triisocyanate and 4,4',4"-trimethyl-3,3',2'-triisocyanate-2,4,6-triphenylcyanurate. The content of the isocyanate compound in the intermediate layer is preferably 10% by mass or more and 50% by mass or less, more preferably 10% by mass or more and 40% by mass or less, based on the total solid content of the intermediate layer. When the content of the isocyanate compound is within the above numerical range, the adhesion to the adhesive layer or the receptive layer can be further enhanced.

Usually, the thickness of the intermediate layer is preferably in the range of 0.05 µm or more and 3 µm or less, and more preferably in the range of 0.5 µm or more and 1.5 µm or less.

In addition to the thermoplastic resin and the isocyanate compound, the intermediate layer may contain, for example, microsilica or polyethylene wax.

### Receptive Layer

Next, the receptive layer which is optionally provided in the transfer film according to the present invention will be described.

While the adhesive layer is adjusted in terms of the configuration thereof to thereby play a role as the receptive layer as described above, the transfer film may include a receptive layer. In this case, such a receptive layer is provided on the protective layer or intermediate layer, and an image is formed on the receptive layer, by thermal transfer from a thermal transfer sheet having a color material layer according to a thermal transfer method. The transfer layer of the transfer film, on which the image is formed, is then transferred to the transfer object, resulting in formation of a printed product. An adhesive layer is optionally provided on the receptor layer.

As a material for forming the receptive layer, a conventionally known resin material which can easily receive a heat-transferable color material such as a sublimation dye or a thermal fusible ink can be used. Examples of the resin material include a polyolefin-based resin such as polypropylene, a halogenated resin such as polyvinyl chloride or polyvinylidene chloride, a vinyl resin such as polyvinyl acetate, a vinyl chloride-vinyl acetate-based polymer, an ethylene-vinyl acetate copolymer or a polyacrylic acid ester, a polyester resin such as polyethylene terephthalate or polybutylene terephthalate, a polystyrene-based resin, a polyamide-based resin, a copolymer-based resin made of olefin such as ethylene or propylene with other vinyl polymer, an ionomer, a cellulose-based resin such as cellulose diastase, and polycarbonate. Among them, a vinyl chloride-vinyl acetate-based polymer or polyvinyl chloride resin is preferable, and a vinyl chloride-vinyl acetate-based polymer is particularly preferable.

Usually, the thickness of the receptive layer is preferably in the range of 0.5 µm or more and 10 µm or less, and more preferably in the range of 1 µm or more and 3 µm or less.

The receptive layer can be formed by dissolving or dispersing single or multiple materials selected from the above materials and various additives added as necessary in a proper solvent such as water or an organic solvent to prepare a coating liquid for the receptive layer, applying the coating liquid by a method such as a gravure printing method, a screen printing method, or a reverse coating method using a gravure plate, and drying it.

### Transfer of Transfer Layer

The method for transfer the transfer layer onto the transfer object by using the transfer film according to the present invention may be a known transfer method, and for example, a known method such as hot stamping (embossing) by heat stamp, whole surface or stripe transfer by a heat roll, or a thermal printer (also referred to as "thermal transfer printer") with a thermal head (heat-sensitive printing head) can be applied. Hot stamping is preferable.

The transfer object is not particularly limited as long as it is used in any application where durability such as abrasion resistance or plasticizer resistance is required, and for example, either natural fibrous paper, coated paper, tracing paper, plastic film which does not deform by heat during transfer, glass, metal, ceramics, wood, cloth, or medium having dye receptivity may be used. An IC card and the like are usually needed to have designability and security. In the case where the transfer film according to the present invention includes no receptive layer, a printing layer, a hologram layer or the like is generally provided on a surface of the transfer object, on which the transfer layer is to be transferred.

### EXAM PLES

Hereinafter, the present invention will be described in more detail with reference to Examples, but the present invention is not intended to be limited to these Examples.

### Example 1

A film obtained by coating one surface of a polyethylene terephthalate (PET) film having a thickness of 12 µm with a release layer comprising melamine-based resin was used as a substrate, and the release layer was coated with a protective layer coating liquid having the following composition by gravure coating so that the thickness after drying was 6 µm, and the resultant was dried and thereafter irradiated with ultraviolet light by using an UV exposure device (Fusion UV, F600V, LH10 lamp, H valve, reflecting mirror: cold type), thereby forming a protective layer.

### Protective Layer Coating Liquid Composition A

- Hydroxyl group-containing (meth)acrylate compound 50 parts (50 mg KOH/g, produced by Shin-Nakamura Chemical Co., Ltd., trade name: NK ester A-9550)
- Unsaturated bond-containing acrylic copolymer 5 parts (produced by Shin-Nakamura Chemical Co., Ltd., trade name: NK ester C24T)
- Photopolymerization initiator 5 parts (produced by Ciba Specialty Chemicals, trade name: Irgacure 907)
- Filler (silica) 40 parts (volume average particle size: 12 nm, produced by NISSAN CHEMICAL INDUSTRIES LTD., trade name: MEK-AC2140Z)
- Toluene 200 parts
- MEK (methyl ethyl ketone) 200 parts

Next, the protective layer formed as described above was coated with an adhesive layer coating liquid by gravure coating so that the thickness after drying was 2 µm, and the resultant was dried to form an adhesive layer, thereby obtaining a transfer film. Herein, the adhesive layer in the present Example also serves as a receptive layer.

### Adhesive Layer Coating Liquid Composition A

- Vinyl chloride-vinyl acetate copolymer 95 parts (produced by Nissin Chemical Co., Ltd., trade name: SOLBIN CNL)
- Epoxy-modified silicone oil 5 parts (produced by Shin-Etsu Chemical Co., Ltd., trade name: KP-1800U)
- Toluene 200 parts
- MEK 200 parts

### Example 2

A transfer film was produced in the same manner as in Example 1 except that the composition of the protective layer coating liquid was changed as follows.

### Protective Layer Coating Liquid Composition B

- Hydroxyl group-containing (meth)acrylate compound 50 parts (90 mg KOH/g, produced by Shin-Nakamura Chemical Co., Ltd., trade name: NK ester A-9570W)
- Unsaturated bond-containing acrylic copolymer 5 parts (produced by Shin-Nakamura Chemical Co., Ltd., trade name: NK ester C24T)
- Photopolymerization initiator 5 parts (produced by Ciba Specialty Chemicals, trade name: Irgacure 907)
- Filler (silica)40 parts (volume average particle size: 12 nm, produced by NISSAN CHEMICAL INDUSTRIES LTD., trade name: MEK-AC2140Z)
- Toluene 200 parts
- MEK 200 parts

### Example 3

A transfer film was produced in the same manner as in Example 1 except that the composition of the protective layer coating liquid was changed as follows.

### Protective Layer Coating Liquid Composition C

- Hydroxyl group-containing (meth)acrylate compound 50 parts (107 mg KOH/g, produced by Shin-Nakamura Chemical Co., Ltd., trade name: NK ester A-TMM-3L)
- Unsaturated bond-containing acrylic copolymer 5 parts (produced by Shin-Nakamura Chemical Co., Ltd., trade name: NK ester C24T)
- Photopolymerization initiator 5 parts (produced by Ciba Specialty Chemicals, trade name: Irgacure 907)
- Filler (silica)40 parts (volume average particle size: 12 nm, produced by NISSAN CHEMICAL INDUSTRIES LTD., trade name: MEK-AC2140Z)
- Toluene 200 parts
- MEK 200 parts

### Example 4

A transfer film was produced in the same manner as in Example 1 except that the composition of the protective layer coating liquid was changed as follows.

### Protective Layer Coating Liquid Composition D

- Hydroxyl group-containing (meth)acrylate compound 50 parts (113 mg KOH/g, produced by Shin-Nakamura Chemical Co., Ltd., trade name: NK ester A-TMM-3LM-N)
- Unsaturated bond-containing acrylic copolymer 5 parts (produced by Shin-Nakamura Chemical Co., Ltd., trade name: NK ester C24T)
- Photopolymerization initiator 5 parts (produced by Ciba Specialty Chemicals, trade name: Irgacure 907)
- Filler (silica)40 parts (volume average particle size: 12 nm, produced by NISSAN CHEMICAL INDUSTRIES LTD., trade name: MEK-AC2140Z)
- Toluene 200 parts
- MEK 200 parts

### Example 5

A transfer film was produced in the same manner as in Example 1 except that the composition of the adhesive layer coating liquid was changed as follows.

### Adhesive Layer Coating Liquid Composition B

- Vinyl chloride-vinyl acetate copolymer 100 parts (produced by Nissin Chemical Co., Ltd., trade name: SOLBIN CNL)
- Toluene 200 parts
- MEK 200 parts

### Example 6

A transfer film was produced in the same manner as in Example 1 except that: the protective layer coating liquid shown in Example 1 was used to form a protective layer; then an intermediate layer coating liquid having the following composition was applied thereon by gravure coating so that the thickness after drying was 1 µm and dried to form an intermediate layer; and then the adhesive layer coating liquid shown in Example 1 was used in the same manner to form an adhesive layer on the intermediate layer.

### Intermediate Layer Coating Liquid Composition

- Polyester resin 3.3 parts (produced by TOYOBO Co., Ltd., trade name: VYLON 200)
- Vinyl chloride-vinyl acetate copolymer 2.7 parts (produced by Nissin Chemical Co., Ltd., trade name: SOLBIN CNL)
- Isocyanate curing agent 1.5 parts (produced by The Ink-Tech Co., Ltd., trade name: XEL curing agent)
- Toluene 3.3 parts
- MEK 6.7 parts

### Example 7

A transfer film was produced in the same manner as in Example 4 except that a primer layer was provided between the protective layer and the adhesive layer in the same manner as in Example 6.

### Comparative Example 1

A transfer film was produced in the same manner as in Example 1 except that the composition of the protective layer coating liquid was changed as follows.

### Protective Layer Coating Liquid Composition F

- Hydroxyl group-containing (meth)acrylate compound 50 parts (10 mg KOH/g, produced by Shin-Nakamura Chemical Co., Ltd., trade name: NK ester A-DPH)
- Unsaturated bond-containing acrylic copolymer 5 parts (produced by Shin-Nakamura Chemical Co., Ltd., trade name: NK ester C24T)
- Photopolymerization initiator 5 parts (produced by Ciba Specialty Chemicals, trade name: Irgacure 907)
- Filler (silica)40 parts (volume average particle size: 12 nm, produced by NISSAN CHEMICAL INDUSTRIES LTD., trade name: MEK-AC2140Z)
- Toluene 200 parts
- MEK 200 parts

### Evaluation of Transfer Film

A card substrate having the following material composition was used as a transfer object.

### Composition of Card Substrate

- Polyvinyl chloride compound (degree of polymerization: 800) 100 parts (containing 10% of additive such as stabilizer)
- White pigment (titanium oxide) 10 parts
- Plasticizer(dioctyl phthalate) 0.5 parts

Using an HDP-600 printer (manufactured by HID Global Co., Ltd.), an ink ribbon for HDP-600 with yellow, magenta and cyan dye layers was overlaid on the adhesive layers of the transfer sheets in Examples 1 to 7 and Comparative Example 1, and images were formed by the heat of the thermal head according to the image information. The transfer layers were then transferred onto the above card substrates to form printed products 1 to 8.

An ink ribbon for HDP-600 with yellow, magenta and cyan dye layers was overlaid on the card substrates, and images were formed by the heat of the thermal head according to the image information. Next, the transfer layers were transferred onto the cards with a heat roller to form printed products 1' to 8'.

### Transfer Property Test

Under the above transfer conditions, five consecutive sheets were transferred, and then the appearance characteristics of the cards were visually evaluated. Evaluation criteria were as follows. The evaluation results were as shown in Table 1 below.
A: Among the five printed products, there is no region where the transfer layer is not transferred.
B: Among the five printed products, there is/are region(s) where the transfer layer is not transferred.

### Transparency Test

Under the above transfer conditions, five consecutive sheets were transferred, and then the appearance characteristics of the cards were visually evaluated. Evaluation criteria were as follows. The evaluation results were as shown in Table 1 below.
A: Almost no haze was seen in the image.
B: Slight haze was seen in the image.
C: Haze was seen in the image.

### Surface Strength Test

The abrasion resistance test (Taber test) of the transfer layer on the card surface was carried out for 1500 cycles according to ANSI-INCITS 322-2002, 5.9 Surface Abrasion. Every 250 cycles, the state of the surface was visually observed and an evaluation test was carried out according to the following evaluation criteria (abrasive wheel: CS-10F, load: 500 gf). The abrasive wheel was polished every 250 cycles. The evaluation results were as shown in Table 1.
A: The image after 1500 cycles was good.
B: The image after 1000 cycles was good, but was not good after 1500 cycles.
C: The image after 500 cycles was not good, but its level was negligible in use.
D: The image after 250 cycles was defective.

### Solvent Resistance Test

A cotton swab soaked in methyl ethyl ketone (MEK) was reciprocated 30 times on the printed products 1 to 8' formed by using the transfer sheets in the examples and the comparative example. The state of the image was visually confirmed to evaluate the solvent resistance based on the following evaluation criteria. The evaluation results were as shown in Table 1.
A: No damage on the image.
B: Slight damage on the image at a level which does not become a problem in use.
C: Some damage on the image which becomes a problem in use.

| Table 1 | Transfer property test | Transparency test | Surface strength test | Solvent resistance test |
|---|---|---|---|---|
| Example 1 (printed product 1) | A | A | A | A |
| Example 2 (printed product 2) | A | A | A | A |
| Example 3 (printed product 3) | A | B | A | A |
| Example 4 (printed product 4) | A | B | A | A |
| Example 5 (printed product 5) | A | A | A | A |
| Example 6 (printed product 6) | A | A | A | A |
| Example 7 (printed product 7) | A | A | A | A |
| Comparative Example 1 (printed product 8) | B | C | A | A |
| Example 1 (printed product 1') | A | A | A | A |
| Example 2 (printed product 2') | A | A | A | A |
| Example 3 (printed product 3') | A | B | A | A |
| Example 4 (printed product 4') | A | B | A | A |
| Example 5 (printed product 5') | A | A | A | A |
| Example 6 (printed product 6') | A | A | A | A |
| Example 7 (printed product 7') | A | A | A | A |
| Comparative Example 1 (printed product 8') | B | C | A | A |

### DESCRIPTION OF SYMBOLS

- 1: transfer film
- 10: substrate
- 20: protective layer
- 30: adhesive layer
- 40: transfer layer
- 50: release layer
- 60: intermediate layer
- 70: receptive layer

## Claims

1. A transfer film comprising a substrate and a protective layer peelably provided on the substrate, wherein:
the protective layer comprises an active ray-cured resin;
the active ray-cured resin contains a hydroxyl group-containing (meth)acrylate compound as a polymerization component, wherein the active ray-cured resin is an active ray-curable resin subjected to curing by irradiation with active ray; and
the hydroxyl value of the hydroxyl group-containing (meth)acrylate compound is 20 mg KOH/g or more and 120 mg KOH/g or less.

2. The transfer film according to claim 1, wherein:
the protective layer comprises a filler; and
the filler has a volume average particle size of 10 nm or more and 100 nm or less.

3. The transfer film according to claim 1 or 2, further comprising an adhesive layer on the protective layer.

4. The transfer film according to claim 3, wherein the adhesive layer has a function as a receptive layer.

5. The transfer film according to claim 3 or 4, wherein the adhesive layer comprises silicone.

6. The transfer film according to claim 1 or 2, comprising a release layer between the substrate and the protective layer.

## Patentansprüche

1. Übertragungsfolie, umfassend ein Substrat und eine Schutzschicht, welche ablösbar auf dem Substrat bereitgestellt ist, wobei:
Die Schutzschicht ein aktivstrahlgehärtetes Harz umfaßt,
das aktivstrahlgehärtete Harz eine Hydroxylgruppen enthaltende (Meth)acrylat-verbindung als eine Polymerisationskomponente enthält, wobei das aktivstrahlgehärtete Harz ein aktivstrahlhärtbares Harz ist, welches dem Härten durch Bestrahlung mit Aktivstrahlen ausgesetzt wurde,
und der Hydroxylwert der Hydroxylgruppen enthaltenden (Meth)acrylatverbindung 20 mg KOH/g oder mehr und 120 mg KOH/g oder weniger beträgt.

2. Übertragungsfolie nach Anspruch 1, wobei:
Die Schutzschicht einen Füllstoff umfaßt, und
der Füllstoff eine volumengemittelte Teilchengröße von 10 nm oder mehr und 100 nm oder weniger aufweist.

3. Übertragungsfolie nach Anspruch 1 oder 2, weiter umfassend eine Haftschicht auf der Schutzschicht.

4. Übertragungsfolie nach Anspruch 3, wobei die Haftschicht eine Funktion als eine Empfangsschicht aufweist.

5. Übertragungsfolie nach Anspruch 3 oder 4, wobei die Haftschicht Silicon umfaßt.

6. Übertragungsfolie nach Anspruch 1 oder 2, umfassend eine Trennschicht zwischen dem Substrat und der Schutzschicht.

## Revendications

1. Film de transfert comprenant un substrat et une couche protectrice disposée de manière pelable sur le substrat, dans lequel :
la couche protectrice comprend une résine durcie aux rayons actifs ;
la résine durcie aux rayons actifs contient un composé (méth)acrylate contenant un groupe hydroxyle comme composant de polymérisation, dans lequel la résine durcie aux rayons actifs est une résine durcissable aux rayons actifs soumise au durcissement par irradiation avec un rayon actif ; et
la valeur hydroxyle du composé (méth)acrylate contenant un groupe hydroxyle est de 20 mg KOH/g ou plus et 120 mg KOH/g ou moins.

2. Film de transfert selon la revendication 1, dans lequel :
la couche protectrice comprend une charge ; et
la charge a une taille de particules moyenne en volume de 10 nm ou plus et de 100 nm ou moins.

3. Film de transfert selon la revendication 1 ou 2, comprenant en outre une couche adhésive sur la couche protectrice.

4. Film de transfert selon la revendication 3, dans lequel la couche adhésive a une fonction en tant que couche réceptive.

5. Film de transfert selon la revendication 3 ou 4, dans lequel la couche adhésive comprend de la silicone.

6. Film de transfert selon la revendication 1 ou 2, comprenant une couche détachable entre le substrat et la couche protectrice.
